# EUROPÄISCHE PATENTSCHRIFT

(11) **EP 2 585 191 B1**
(45) Veröffentlichungstag und Bekanntmachung des Hinweises auf die Patenterteilung: **23.01.2019**
(21) Anmeldenummer: 11722333.9
(22) Anmeldetag: 27.05.2011
(51) Int. Cl.: B01D 39/08, B01D 39/16

(54) **FILTERMATERIAL FÜR FLUIDE**
FILTER MATERIAL FOR FLUIDS
MATÉRIAU FILTRANT POUR FLUIDES

(30) Priorität: 23.06.2010 DE 102010025218
(43) Veröffentlichungstag der Anmeldung: 01.05.2013
(73) Patentinhaber: Hydac Filtertechnik GmbH, 66280 Sulzbach/Saar (DE)
(72) Erfinder: SCHWENDER, Matthias, 66459 Kirkel (DE); SCHMITZ, Andreas, 66459 Kirkel (DE); KOCH, Edwin, 66636 Tholey (DE)
(74) Vertreter: Bartels und Partner, Patentanwälte
(86) Internationale Anmeldenummer: PCT/EP2011/002641
(87) Internationale Veröffentlichungsnummer: WO 2011/160756

(56) Entgegenhaltungen:
- EP-A1- 0 934 769
- WO-A1-03/031711
- WO-A1-03/033100
- WO-A1-2011/160808
- DE-A1- 2 407 952
- DE-A1-102008 029 443
- JP-A- 57 107 213

## Beschreibung

Die Erfindung betrifft ein Filtermaterial für Fluide, insbesondere für Hydraulikflüssigkeiten, mit den Merkmalen im Oberbegriff von Anspruch 1.

Filtermaterialien zur Herstellung von austauschbaren Filterelementen in hydraulischen Anlagen sind in mannigfacher Ausgestaltung bekannt und bestehen beispielsweise aus einem Filtervlies, vorzugsweise mehrlagig, mit einer Stützstruktur auf ein oder beiden Seiten (Anström- oder Abströmseite). Solche Filterelemente werden beispielsweise von einer zu filtrierenden Hydraulikflüssigkeit durchströmt, wobei sich von der Rohseite zu der Reinseite eine z. T. beträchtliche Druckdifferenz ergibt. Um dieser Druckdifferenz und auch dynamischen Strömungskräften in dem Unfiltrat standhalten zu können, weisen die Filtermaterialien, aus denen entsprechende Filterelemente gefertigt sind, sogenannte Stützstrukturen auf. Solche Stützstrukturen unterliegen einer starken Druckwechselbelastung im Betrieb eines Filterelementes.

Bekannte Stützstrukturen sind meist aus Metallgeweben, insbesondere Geweben aus Edelstahldrähten gebildet. Im Stand der Technik, beispielsweise aus DE 27 18 581 C2, sind solche Gewebe in Form von Standardgeweben ausgeführt, wobei in der Art einer sogenannten Leinwandbindung die Fäden immer abwechselnd über und dann wieder unter dem nächsten Faden verwebt sind. Solche herkömmlichen Stützstrukturen werden den beiden zu stellenden Anforderungen, nämlich hohe mechanische Festigkeit bei möglichst hoher Fluiddurchlässigkeit, nicht gleichermaßen gerecht. Bei dieser Webart führen größere Maschenweiten zwar zu geringeren Strömungswiderständen, andererseits bedingt eine hohe Widerstandsfähigkeit gegen Druckwechselbelastungen bei dieser Webart verhältnismäßig geringe Maschenweiten.

Aus der DE 10 2008 029 443 A1 geht eine Filterbahn für die Filtration von Fluiden hervor, deren Filtermaterial ein ein- oder mehrlagig ausgebildetes Filtermedium und eine an dessen zumindest einer Seite flächig anliegende Stützstruktur umfasst, die aus mindestens einem Einzelgewebe besteht, das aus Schuss- und Kettfäden aufgebaut ist. Parallel zu einzelnen Schussfäden sind mehrere Kettfäden übergreifende Metalldrähte verwebt, die der Beheizung des Filtermaterials oder zur Ausbildung eines Kondensators dienen.

Im Hinblick auf diese Problematik liegt der Erfindung die Aufgabe zugrunde, ein Filtermaterial zur Verfügung zu stellen, bei dem die Stützstruktur trotz einer anzustrebenden hohen Fluiddurchlässigkeit eine besonders hohe Strukturfestigkeit gewährleistet.

Erfindungsgemäß ist diese Aufgabe durch ein Filtermaterial gelöst, das die Merkmale des Patentanspruches 1 in seiner Gesamtheit aufweist.

Gemäß dem kennzeichnenden Teil des Anspruches 1 besteht eine wesentliche Besonderheit der Erfindung darin, dass die Stützstruktur zumindest ein Einzelgewebe aufweist, das in einer von einem Standardgewebe abweichenden Webart ausgeführt ist, wobei die Schuss- und/oder Kettfäden in einer langflottierenden Bindung derart verwebt sind, dass Flottungen gebildet sind, bei denen Fadenübergriffe über mehr als zwei, d.h., drei oder mehr benachbarte Fäden erfolgen. Durch eine derartige Webart lässt sich ein wesentlich besserer Kompromiss hinsichtlich guter Festigkeitseigenschaften und hoher Fluiddurchlässigkeit realisieren.

Mit Vorteil ist die Anordnung so getroffen, dass die Schuss- und/oder Kettfäden ein Einzelgewebe in Atlasbindung bilden, wobei ein Fadenübergriff über vier benachbarte Fäden im Webzyklus vorgesehen ist, indem beispielsweise die Schussfäden über jeweils vier benachbarte Kettfäden verlaufend gewebt sind.

Bei besonders vorteilhaften Ausführungsbeispielen kann zusätzlich zum ersten Einzelgewebe, vorzugsweise in Atlasbindung, ein zweites Einzelgewebe vorgesehen sein, wobei beide Einzelgewebe über eingewebte Bindefäden miteinander verbunden sind.

Mit Vorteil kann die Anordnung hierbei so getroffen sein, dass die Bindefäden als Bindeschussfäden zusätzlich zu den Schussfäden der beiden Einzelgewebe in die Gewebestruktur eingewebt sind.

Wenn das zusätzliche zweite Einzelgewebe in Leinwandbindung ausgeführt ist, kann zur Ausbildung einer vorteilhaften Gewebestruktur so vorgegangen werden, dass die Bindeschussfäden jeden vierten Kettfaden der Leinwandbindung des zweiten Einzelgewebes übergreifen und jeden fünften Kettfaden der Atlasbindung des ersten Einzelgewebes untergreifen.

In besonders vorteilhafter Weise können Schuss- und/oder Kettfäden zumindest eines Einzelgewebes aus Metalldraht, insbesondere Edelstahl, oder aus Kunststoff bestehen.

Die Bindeschussfäden können ebenfalls aus Metalldraht, insbesondere Edelstahl, oder aus Kunststoff bestehen.

Besonders gute Festigkeitseigenschaften lassen sich realisieren, wenn die Stützstruktur ein Vlies, vorzugsweise ein beschichtetes Polyestervlies, aufweist, auf das das zumindest eine Einzelgewebe auflaminiert ist.

Gegenstand der Erfindung ist auch ein Filterelement, insbesondere zylindrisches Filterelement, mit einer Vielzahl von einzelnen Filterfalten, bestehend aus einem erfindungsgemäßen Filtermaterial, das auf einer oder beiden Seiten mit einer Stützstruktur versehen ist.

Nachstehend ist die Erfindung anhand der Zeichnungen im Einzelnen erläutert. Es zeigen:
- Fig. 1: einen im Mikroskop vergrößert dargestellten Ausschnitt eines Filtermaterials gemäß dem Stand der Technik;
- Fig. 2: eine schematische Darstellung des Webmusters einer Atlasbindung;
- Fig. 3: einen abgebrochen und gegenüber einer praktischen Ausführungsform etwa fünffach vergrößerten Ausschnitt eines für das erfindungsgemäße Filtermaterial vorgesehenen Einzelgewebes in Form einer Atlasbindung;
- Fig. 4: einen gegenüber Fig. 3 stark vergrößert gezeichneten Ausschnitt der Stützstruktur eines Ausführungsbeispieles mit aus zwei Einzelgeweben gebildeter Stützstruktur, gesehen auf das als Standardgewebe ausgeführte Einzelgewebe; und
- Fig. 5: eine Schnittdarstellung entsprechend der Schnittlinie V-V von Fig. 1.

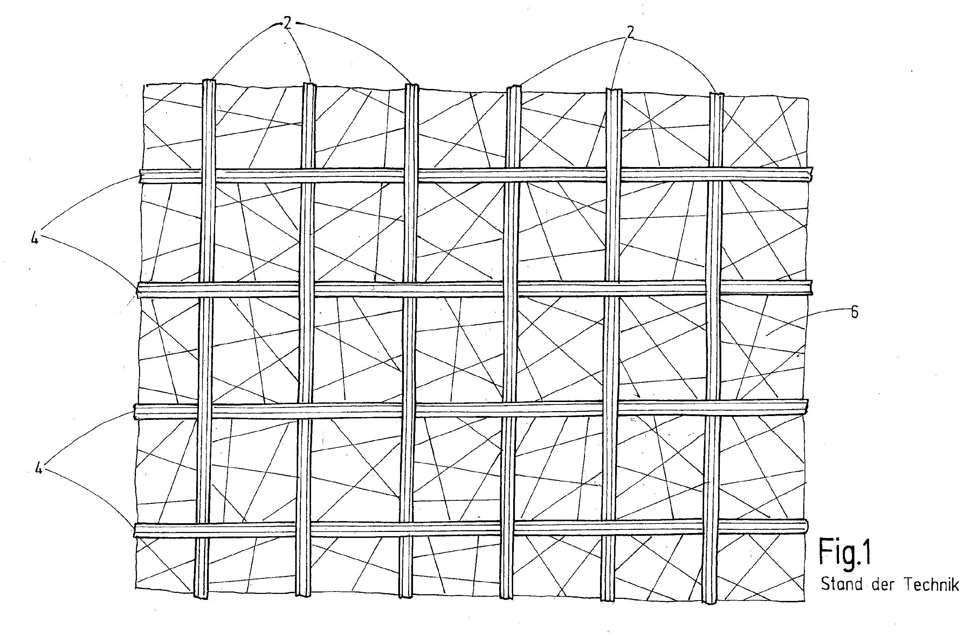

Die Fig. 1 zeigt einen stark vergrößert gezeichneten Ausschnitt eines Filtermaterials gemäß dem Stand der Technik, gesehen auf die in Form eines Edelstahlgewebes ausgebildete Stützstruktur. Das Gewebe aus Kettfäden 2 und Schussfäden 4 ist als Standardgewebe in Leinwandbindung ausgeführt, wobei die Maschenweite in Kettrichtung etwa 970 *µ*m und in Schussrichtung etwa 890 *µ*m beträgt, bei einer Dicke der Kettfäden von etwa 150 *µ*m und der Schussfäden von etwa 170 *µ*m. Das Gewebe liegt flächig am Filtermedium 6 an.

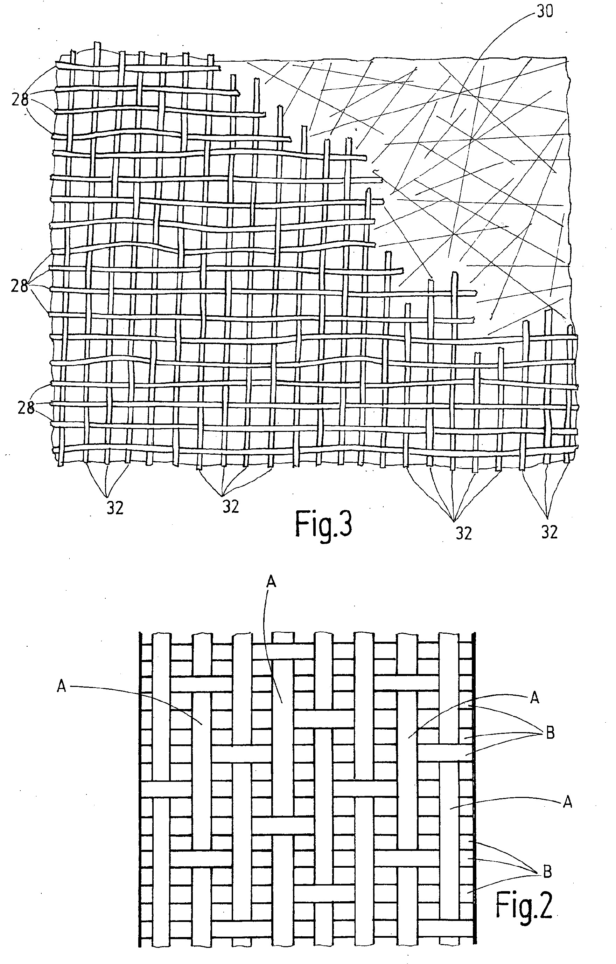

Die Fig. 3 zeigt einen vergrößerten Ausschnitt eines Filtermaterials gemäß einem Ausführungsbeispiel der Erfindung, bei dem die Stützstruktur aus einem Einzelgewebe gebildet ist, dessen Webart sich von einem Standardgewebe dadurch unterscheidet, dass eine langflottierende Bindung vorgesehen ist, bei der ein Fadenübergriff über mehr als zwei benachbarte Fäden erfolgt. Bei dem Ausführungsbeispiel von Fig. 3 handelt es sich hierbei um ein Atlasgewebe, wie es in Fig. 2 als Fadenschema dargestellt ist, wobei die in Fig. 2 beispielhaft mit A bezeichneten Fäden jeweils vier benachbarte, mit B bezeichnete Fäden übergreifen, wonach der Untergriff des nächstfolgenden Fadens B erfolgt. Bei dem Ausführungsbeispiel von Fig. 3 sind es die Schussfäden 4, die jeweils vier benachbarte Kettfäden 2 übergreifen.

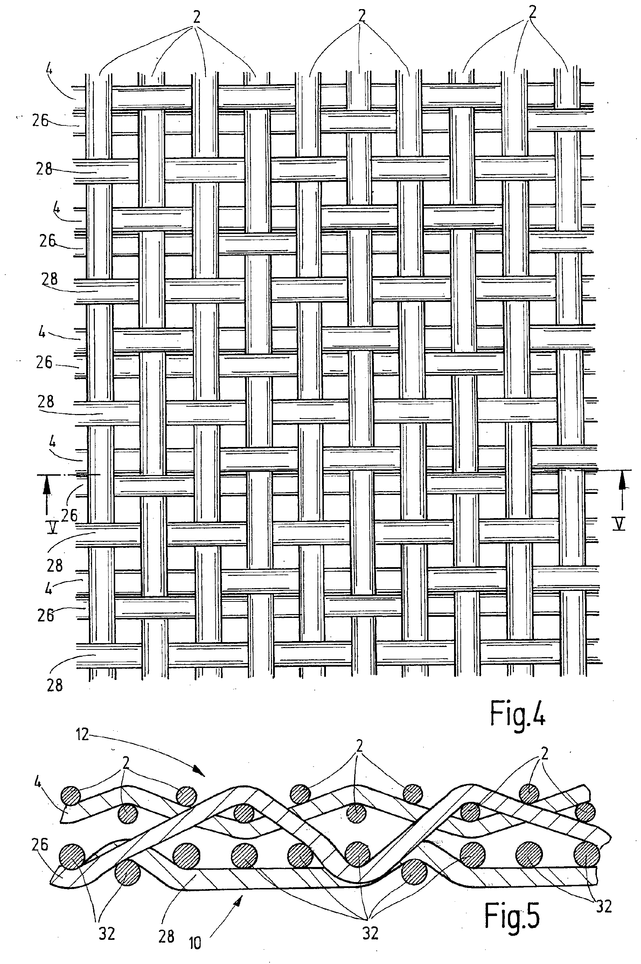

Während es sich beim Beispiel von Fig. 3 um ein Einzelgewebe handelt, zeigen Fig. 4 und 5 ein abgewandeltes Beispiel, bei dem zusätzlich zu einem in Atlasbindung ausgeführten Einzelgewebe 10 ein zweites Einzelgewebe 12 vorhanden ist, das in Standardbindung (Leinwandbindung) ausgeführt ist und mit dem ersten Einzelgewebe 10 einen Verbund bildet und als Stützgewebe dient. Der Verbund der beiden Einzelgewebe 10, 12 ist in der Weise gebildet, dass Bindeschussfäden 26 zusätzlich zu den Schussfäden 4 des Standardgewebes (Einzelgewebe 12) und den Schussfäden 28 des Atlasgewebes (Einzelgewebe 10) eingewebt sind, wobei die Bindeschussfäden 26 sich, wie aus Fig. 4 erkennbar ist, mit den Schussfäden 4 des Einzelgewebes 12 abwechseln.

Die Schnittdarstellung von Fig. 5 zeigt die Einbindung der Bindeschussfäden 26. Ausgehend von einem Untergriff eines Kettfadens 32 des ersten Einzelgewebes 10 (Atlasgewebe) verlaufen die Bindeschussfäden 26 in einem Winkel von etwa 40° zur Gewebeebene bis zu einem Übergriff eines Kettfadens 2 des zweiten Einzelgewebes 12 (Leinwandbindung) und von dort in steilerem Verlauf zum Untergriff eines Kettfadens 32 des ersten Einzelgewebes 10, wobei sich zwischen den Untergriffen der Kettfäden 32 jeweils vier Kettfäden 32 befinden. Die Übergriffe an den Kettfäden 2 des zweiten Einzelgewebes 12 erfolgen an jedem vierten Kettfaden 2.

Wie sich gezeigt hat, führt der Ersatz von Standardgeweben durch eine abweichende Webart, wie die Atlasbindung, zu einem optimalen Kompromiss von Strukturfestigkeit und Durchlasseigenschaften für Fluide. Insbesondere ist dies bei einem wie in Fig. 4 und 5 gezeigten Beispiel der Fall, wo das Atlasgewebe mit einem in Standardbindung ausgeführten Stützgewebe vereinigt ist.

Besonders gute Eigenschaften der Stützstruktur ergeben sich, wenn das jeweilige Gewebe, sei es ein Einzelgewebe 10 in Atlasbindung für sich oder ein Gewebeverbund aus Einzelgewebe 10 und Einzelgewebe 12, nicht unmittelbar am Filtermedium 6 anliegt, wie es in Fig. 1 am Beispiel des Filtermaterials gemäß dem Stand der Technik der Fall ist, sondern wenn die Stützstruktur in der Weise ausgebildet ist, dass das zumindest eine Einzelgewebe 10, 12 auf ein Vlies 30 auflaminiert ist. Besonders gute Eigenschaften ergeben sich, wenn das Gewebe 10, 12 aus Kunststofffäden gebildet ist, beispielsweise aus Polybutylenterephtalat, Polypropylen oder Polyester, das auf ein vorzugsweise beschichtetes Vlies auflaminiert ist, etwa ein Polyestervlies oder ein Vlies aus PBT oder PP. Ein derartiges Laminat führt zu einer verbesserten und steiferen Abstützung und resultiert außerdem in einem verbesserten Differenzdruckverhalten des Filtermaterials sowie einer verbesserten Kollapsstabilität. Es gibt keinen Verzug in X-Richtung, d. h. das Material ist wesentlich formstabiler als die beiden Einzellagen zusammen. Zusätzlich ist dieses Laminat dünner als die beiden Einzellagen, und es passen mehr Falten (Fläche) in das Filtermaterial. Das Laminat hat zudem eine verbesserte Drainagefunktion als die beiden Einzellagen zusammen hätten, was sich zusätzlich in einem niedrigeren Differenzdruck beim Filtrationsbetrieb niederschlägt. Die Fig. 3 verdeutlicht ein derartiges Ausführungsbeispiel, bei dem das als Atlasgewebe ausgeführte Einzelgewebe 10, das aus Kunststofffäden 28 und 32 gewebt ist, vollflächig auf ein in Fig. 3 mit 30 bezeichnetes, beschichtetes Polyestervlies auflaminiert ist.

## Patentansprüche

1. Filtermaterial für Fluide, insbesondere für Hydraulikflüssigkeiten, umfassend:
- ein ein- oder mehrlagig ausgebildetes Filtermedium (6),
- eine an dessen zumindest einer Seite flächig anliegende Stützstruktur, die aus mindestens einem Einzelgewebe (10, 12) besteht, das aus Schuss- (28) und Kettfäden (32) aufgebaut ist,
**dadurch gekennzeichnet, dass** die Schuss- (28) und/oder Kettfäden (32) unter Bildung einer langflottierenden Bindung drei oder mehr benachbarte Kett- (32) bzw. Schussfäden (28) übergreifen.

2. Filtermaterial nach Anspruch 1, **dadurch gekennzeichnet, dass** die Schuss- (28) und/oder Kettfäden (32) ein Einzelgewebe (10) in Atlasbindung bilden.

3. Filtermaterial nach Anspruch 1 oder 2, **dadurch gekennzeichnet, dass** es zusätzlich zum ersten Einzelgewebe (10) ein zweites Einzelgewebe (12) aufweist, und dass beide Einzelgewebe (10, 12) über eingewebte Bindefäden (26) miteinander verbunden sind.

4. Filtermaterial nach Anspruch 3, **dadurch gekennzeichnet, dass** die Bindefäden als Bindeschussfäden (26) zusätzlich zu den Schussfäden (4, 28) der beiden Einzelgewebe (10, 12) in die Gewebestruktur eingewebt sind.

5. Filtermaterial nach Anspruch 3 oder 4, **dadurch gekennzeichnet, dass** das zusätzliche zweite Einzelgewebe (12) in Leinwandbindung ausgeführt ist.

6. Filtermaterial nach den Ansprüchen 2 und 5, **dadurch gekennzeichnet, dass** die Bindeschussfäden (26) jeden vierten Kettfaden (2) der Leinwandbindung des zweiten Einzelgewebes (12) übergreifen und jeden fünften Kettfaden (32) der Atlasbindung des ersten Einzelgewebes (10) untergreifen.

7. Filtermaterial nach einem der vorhergehenden Ansprüche, **dadurch gekennzeichnet, dass** Schuss- (4, 28) und/oder Kettfäden (2, 32) zumindest eines Einzelgewebes (12, 10) aus Metalldraht, insbesondere Edelstahl, oder aus Kunststoff bestehen.

8. Filtermaterial nach einem der Ansprüche 4 bis 7, **dadurch gekennzeichnet, dass** die Bindeschussfäden (26) aus Metalldraht, insbesondere Edelstahl, oder aus Kunststoff bestehen.

9. Filtermaterial nach einem der vorhergehenden Ansprüche, **dadurch gekennzeichnet, dass** die Stützstruktur ein Vlies (30), vorzugsweise ein beschichtetes Polyestervlies, aufweist, auf das das mindestens eine Einzelgewebe (10, 12) auflaminiert ist.

10. Filterelement, insbesondere zylindrisches Filterelement mit einer Vielzahl von einzelnen Filterfalten, bestehend aus einem Filtermaterial nach einem der vorhergehenden Ansprüche, das auf einer oder beiden Seiten mit einer Stützstruktur (10, 12, 30) versehen ist.

## Claims

1. A filter material for fluids, in particular for hydraulic fluids, comprising:
- a single-layer or multi-layer filter medium (6),
- a support structure resting flatly on the at least one side thereof, which structure consists of at least one individual fabric (10, 12) which is made of warp threads (28) and weft threads (32),
**characterised in that** the warp threads (28) and/or weft threads (32) pass over three or more adjacent weft threads (28) and/or warp threads (32), accompanied by the formation of a long-float weave.

2. The filter material according to claim 1, **characterised in that** the warp threads (28) and/or weft threads (32) form an individual fabric (10) in a satin weave.

3. The filter material according to claim 1 or 2, **characterised in that**, in addition to the first individual fabric (10) it has a second individual fabric (12), and that the two individual fabrics (10, 12) are connected to one another via woven-in binding threads (26).

4. The filter material according to claim 3, **characterised in that**, in addition to the warp threads (4, 28) of the two individual fabrics (10, 12), the binding threads are woven into the fabric structure as binding warp threads (26).

5. The filter material according to claim 3 or 4, **characterised in that** the additional second individual fabric (12) is made in a plain weave.

6. The filter material according to claims 2 and 5, **characterised in that** the binding warp threads (26) pass over every fourth weft thread (2) of the plain weave of the second individual fabric (12) and pass under every fifth weft thread (32) of the satin weave of the first individual fabric (10).

7. The filter material according to one of the preceding claims, **characterised in that** warp threads (4, 28) and/or weft threads (2, 32) at least of one individual fabric (12,10) consist of metal wire, in particular stainless steel, or of plastic.

8. The filter material according to one of claims 4 to 7, **characterised in that** the binding warp threads (26) consist of metal wire, especially stainless steel, or of plastic.

9. The filter material according to one of the preceding claims, **characterised in that** the support structure has a nonwoven (30), preferably a coated polyester nonwoven, onto which the at least one individual fabric (10, 12) is laminated.

10. A filter element, in particular a cylindrical filter element with a plurality of individual filter folds, consisting of a filter material according to one of the preceding claims, which is provided with a support structure (10, 12, 30) on one or both sides.

## Revendications

1. Matière filtrante pour des fluides, notamment pour des liquides hydrauliques, comprenant :
- un milieu (6) filtrant, constitué d'une couche ou de plusieurs couches,
- une structure d'appui, qui s'applique en surface à au moins l'une de ses faces et qui est constituée d'au moins un simple tissé (10, 12) formé de fils (28) de trame et de fils (32) de chaîne,
**caractérisée en ce que** les fils (28) de trame et/ou les fils (32) de chaîne sautent, en formant une armure flottée longue, trois ou plusieurs fils (32) de chaîne ou fils (28) de trame voisins.

2. Matière filtrante suivant la revendication 1, **caractérisée en ce que** les fils (28) de trame et/ou les fils (32) de chaîne forment un simple tissé (10) en armure satin.

3. Matière filtrante suivant la revendication 1 ou 2, **caractérisée en ce qu'**il a, supplémentairement au premier simple tissé (10), un deuxième simple tissé (12) et **en ce que** les deux simples tissés (10, 12) sont reliés entre eux par des fils (26) de liaison incorporés par tissage.

4. Matière filtrante suivant la revendication 3, **caractérisée en ce que** les fils de liaison sont incorporés par tissage dans la structure tissée, sous la forme de fils de trame de liaison supplémentairement aux fils (4, 28) de trame des deux simples tissés (10, 12).

5. Matière filtrante suivant la revendication 3 ou 4, **caractérisée en ce que** le deuxième simple tissé (12) supplémentaire est réalisé en armure toile.

6. Matière filtrante suivant les revendications 2 et 5, **caractérisée en ce que** les fils (26) de trame de liaison sautent un fil (2) de chaîne sur quatre de l'armure toile du deuxième simple tissé (12) et prennent un fil (32) de trame sur cinq de l'armure satin du premier simple tissé (10) .

7. Matière filtrante suivant l'une des revendications précédentes, **caractérisée en ce que** les fils (4, 28) de trame et/ou les fils (2, 32) de chaîne constituent au moins un simple tissé (12, 10) en fil métallique, notamment en acier fin, ou en matière plastique.

8. Matière filtrante suivant l'une des revendications 4 à 7, **caractérisée en ce que** les fils (26) de trame de liaison sont en fil métallique, notamment en acier fin, ou en matière plastique.

9. Matière filtrante suivant l'une des revendications précédentes, **caractérisée en ce que** la structure d'appui comporte un non tissé (30), de préférence un non tissé de polyester enduit, sur lequel est laminé au moins un simple tissé (10, 12).

10. Elément filtrant, notamment élément filtrant cylindrique, ayant une pluralité de plis de filtre en une matière filtrante suivant l'une des revendications précédentes, qui est pourvue d'une structure (10, 12, 30) d'appui sur une face ou sur les deux faces.
